# EUROPÄISCHE PATENTSCHRIFT

(11) **EP 3 228 526 B1**
(45) Veröffentlichungstag und Bekanntmachung des Hinweises auf die Patenterteilung: **19.12.2018**
(21) Anmeldenummer: 17000231.5
(22) Anmeldetag: 14.02.2017
(51) Int. Cl.: B62D 25/00, B62D 25/16, B62D 27/02, F16J 15/14, B60R 13/06

(54) **VERFAHREN ZUM ABDICHTEN EINER VERBINDUNGSKANTE**
METHOD FOR SEALING A SEAM
PROCEDE D'ETANCHEIFICATION D'UN BORD DE JONCTION

(30) Priorität: 09.04.2016 DE 102016004357
(43) Veröffentlichungstag der Anmeldung: 11.10.2017
(73) Patentinhaber: Audi AG, 85045 Ingolstadt (DE)
(72) Erfinder: Drechsel, Marcus, DE - 85120 Hepberg (DE)
(74) Vertreter: Eickmeyer, Dietmar

(56) Entgegenhaltungen:
- DE-A1- 10 203 027
- DE-A1-102011 102 300
- DE-A1-102012 005 499
- US-A- 5 327 612
- US-A1- 2015 367 788

## Beschreibung

Die Erfindung betrifft ein Verfahren zum Abdichten einer Verbindungskante und ein System zum Abdichten einer Verbindungskante.

Beim Herstellen einer Karosserie eines Kraftfahrzeugs sind viele Kunststoffbauteile zu verwenden, die in einem Rohbau des Kraftfahrzeugs verclipst werden und die eine Expansionskomponente aufweisen, die während eines Lackierprozesses expandiert, wobei Hohlräume in der Karosserie verschlossen werden. Dadurch ergibt sich eine Reduktion eines Geräuschniveaus in dem Kraftfahrzeug sowie eine Abschottung gegen ein Eindringen von Staub und Wasser in die Karosserie. Eine derartige Abschottung gegen Schall und Schmutz aus einem Schwellerbereich ist auch zwischen einem hinteren Türeinstieg und einem Radhaus des Kraftfahrzeugs vorzusehen. Allerdings ist hierbei zur Vermeidung von Korrosion eine Öffnung in einem bspw. als Schotteil ausgebildeten Karosserieteil erforderlich, um ein Auftragen von Wachs in einer Radlaufkante zu ermöglichen. Weiterhin ist hierbei zu Lasten der Akustik des Kraftfahrzeugs eine Öffnung in einem Schaumteil an der Radlaufkante zuzulassen, durch die jedoch Schmutz eindringen kann.

Maßnahmen zum Versiegeln einer Karosserie eines Kraftfahrzeugs sind bspw. aus den Druckschriften US 5 678 826 A oder WO 02/062648 A2 bekannt.

Das Dokument DE 102 03 027 A1 beschreibt eine Nahtabdichtung für einen Fügebereich zwischen Blechteilen einer Kraftfahrzeugkarosserie mit einer Dichtmittelanordnung, welche eine Fuge zwischen den miteinander verbundenen Blechteilen vollständig überdeckt. Die Dichtmittelanordnung umfasst eine Dichtbahn, die vollflächig dichtend auf an die Fuge angrenzenden, streifenförmigen Dichtzonen der Blechteile aufliegt.

Vor diesem Hintergrund werden ein Verfahren und ein System mit den Merkmalen der unabhängigen Patentansprüche vorgestellt. Ausgestaltungen des Verfahrens und des Systems gehen aus den abhängigen Patentansprüchen und der Beschreibung hervor.

Das erfindungsgemäße Verfahren ist zum Abdichten einer Verbindungskante, an der zwei Bauteile eines Kraftfahrzeugs aneinandergrenzen, vorgesehen, wobei sich die Verbindungskante zwischen den beiden Bauteilen befindet. Dabei wird in und/oder auf einem dreieckigen Verbindungsbereich zwischen den beiden Bauteilen ein Fließelement als Fließhilfe für eine Dichtsubstanz angeordnet, das einen ersten, bspw. dreieckigen Körper mit zwei Außenkanten aufweist. Die beiden Außenkanten des Fließelements stoßen an einer Ecke aufeinander und sind unter einem Winkel zueinander orientiert. Jeweils eine Außenkante des ersten Körpers des Fließelements wird einem der beiden Bauteile zugewandt. Die Ecke des ersten, bspw. dreieckigen Körpers wird der Verbindungskante zugewandt, wobei entlang eines Abschnitts jeweils einer Außenkante und jeweils eines Bauteils sowie zwischen der Ecke und der Verbindungskante ein Eckspalt bereitgestellt und/oder gebildet wird, der zwei miteinander verbundene Spalte umfasst, die in der Regel unter demselben Winkel wie die beiden Außenkanten des ersten, bspw. dreieckigen Körpers zueinander orientiert sind. Bei dem Verfahren wird auf den ersten Körper eine flüssige Dichtsubstanz direkt oder indirekt geschüttet bzw. gekippt, wobei sich die Dichtsubstanz zumindest teilweise zunächst auf dem ersten Körper ansammelt.

Ergänzend ist vorgesehen, dass die flüssige Dichtsubstanz zumindest teilweise durch den Eckspalt als Durchgang für die Dichtsubstanz zwischen dem Fließelement und beiden Bauteilen fließt und entlang der Verbindungskante unterhalb des ersten Körpers fließt und sich ferner entlang der Verbindungskante oberhalb und unterhalb des ersten Körpers ansammelt sowie in und/oder entlang der Verbindungskante oberhalb und unterhalb des ersten Körpers erstarrt bzw. aushärtet. Demnach beeinflusst das Fließelement einen Fluss der Dichtsubstanz, wobei sich die Dichtsubstanz, wie voranstehend beschrieben, abhängig von dem Fließelement verhalten kann. Weiterhin ist der Fluss der Dichtsubstanz von deren Temperatur und/oder Viskosität aber auch von einer Menge der Dichtsubstanz, die auf das Fließelement üblicherweise pro Zeiteinheit geschüttet wird, abhängig.

In Ausgestaltung des Verfahrens ist vorgesehen, dass der erste, bspw. dreieckige Körper des Fließelements eine Vielzahl von Löchern bzw. Öffnungen aufweist, die ein Raster bilden, wobei bei Durchführung des Verfahrens eine Fließgeschwindigkeit, der auf den ersten Körper geschütteten Dichtsubstanz reduziert wird. Hierbei werden die Löcher des ersten Körpers von der Dichtsubstanz durchströmt und somit der erste Körper durchtränkt. Außerdem fließt zumindest ein Teil der Dichtsubstanz durch den ersten Körper des Fließelements zu der Verbindungskante unterhalb des Abschnitts.

Dabei ist der erste Körper des Fließelements als Sieb ausgebildet und/oder zu bezeichnen. Falls der erste Körper massiv ausgebildet ist, ist er als Kelle ausgebildet oder zu bezeichnen.

Alternativ oder ergänzend ist vorgesehen, dass an den Außenkanten des ersten, bspw. dreieckigen Körpers ein Flansch angeordnet ist, wobei jeweils ein Abschnitt des Flansches den ersten, üblicherweise dreieckigen Körper fortsetzt und zu einer Außenseite und/oder Oberfläche des ersten Körpers einen Winkel aufweist. Je nach Definition weist jede Außenkante einen Abschnitt des Flansches auf. Bei Durchführung des Verfahrens fließt zumindest ein Teil der flüssigen Dichtsubstanz über den Flansch zu der Verbindungskante unterhalb des Fließelements.

In Ausgestaltung ist es denkbar, dass der erste Körper sowohl die Öffnungen als auch den Flansch an seiner Außenseite aufweist.

Durch eine Beschaffenheit des ersten Körpers und/oder der Abschnitte des Flansches ergibt sich für die Dichtsubstanz ein Fließwiderstand, wodurch ein Fließen und/oder eine Fließeigenschaft des Dichtsubstanz beeinflusst wird bzw. werden.

Außerdem wird zwischen dem ersten und zweiten Bauteil ein Trägerbauteil angeordnet, das einen Raum zwischen dem ersten und zweiten Bauteil bis auf den dreieckigen Verbindungsbereich ausfüllt.

Hierbei ist es möglich, dass das Fließelement als Teil des Trägerbauteils ausgebildet ist und in dem dreieckigen Verbindungsbereich angeordnet ist.

Alternativ oder ergänzend wird das Fließelement auf dem Trägerbauteil angeordnet und daran als zusätzliches Bauteil befestigt. Dabei ist es möglich, das Fließelement und das Trägerbauteil bspw. über eine Abdichtung miteinander zu verbinden.

Das Fließelement umfasst mindestens einen zweiten Körper als Halteabschnitt, der den ersten, bspw. dreieckigen Körper fortsetzt. Der mindestens eine Halteabschnitt wird bei Durchführung des Verfahrens an und/oder auf dem Trägerbauteil angeordnet, in der Regel befestigt. Hierbei wird der dreieckige Verbindungsbereich bis auf den Eckspalt von dem ersten Körper abgedeckt.

Die Dichtsubstanz ist bei einer üblichen Umgebungs- und/oder Raumtemperatur, die bspw. geringer als 100 °C oder zumindest geringer als 120 °C ist, fest. Bei Durchführung des Verfahrens wird die ursprünglich feste Dichtsubstanz, bevor sie auf den ersten Körper geschüttet wird, erwärmt bzw. erhitzt, wobei sich die Dichtsubstanz verflüssigt. Die verflüssigte Dichtsubstanz fließt oberhalb des ersten Körpers entlang der Verbindungskante, wird von dem ersten Körper zumindest teilweise gebremst und/oder auf diesem angesammelt und fließt ausgehend hiervon in Richtung der Verbindungskante und benetzt die Verbindungskante unterhalb des ersten Körpers. Dabei kühlt sich die flüssige Dichtsubstanz in und/oder entlang der Verbindungskante sowohl ober- als auch unterhalb des ersten Körpers ab und erstarrt und/oder verfestigt sich. Dabei ist es möglich, dass die Dichtsubstanz aktiv gekühlt wird sowie weiterhin erstarrt. Durch Beeinflussen der Temperatur der Dichtsubstanz, wobei die Dichtsubstanz aktiv temperiert und somit erhitzt und/oder gekühlt wird, ist die Dichtsubstanz entlang der Verbindungskante oberhalb und unterhalb des Fließelements bspw. homogen zu verteilen.

In Ausgestaltung wird eine als Radhauskante ausgebildete Verbindungskante zwischen einem Radhaus als erstem Bauteil und einer Seitenwand als zweitem Bauteil abgedichtet.

Bei dem Verfahren ist es weiterhin möglich, dass die Dichtsubstanz zunächst auf eine Stelle der Verbindungskante geschüttet wird, die oberhalb des Fließelements angeordnet ist, wobei vorgesehen ist, dass die Dichtsubstanz ausgehend von der Stelle entlang der Verbindungskante oberhalb des Fließelements zu dem Fließelement fließt und dabei auf dieses geschüttet wird.

Die Dichtsubstanz wird außerdem in und/oder auf der Verbindungskante angesammelt, wobei die Dichtsubstanz in und/oder auf der Verbindungskante aushärtet und diese abdichtet.

Das erfindungsgemäße System ist zum Abdichten einer Verbindungskante, an der zwei Bauteile einer Karosserie eines Kraftfahrzeugs aneinandergrenzen, vorgesehen, wobei sich die Verbindungskante zwischen den beiden Bauteilen befindet. Das System weist ein Fließelement auf, wobei das Fließelement einen ersten, bspw. dreieckigen Körper mit zwei Außenkanten aufweist, die an einer Ecke aufeinanderstoßen. Das Fließelement ist in und/oder auf einem dreieckigen Verbindungsbereich zwischen den beiden Bauteilen anzuordnen, wobei jeweils eine Außenkante des ersten Körpers einem der beiden Bauteile und der Ecke der Verbindungskante zuzuwenden ist, wobei entlang eines Abschnitts jeweils einer Außenkante und jeweils eines Bauteils sowie zwischen der Ecke und der Verbindungskante ein Eckspalt bereitzustellen und/oder zu bilden ist. Zum Abdichten ist auf den ersten Körper eine flüssige Dichtsubstanz zu schütten.

Dabei ist es möglich, dass sich die Dichtsubstanz zumindest teilweise auf dem ersten Körper des Fließelements ansammelt, zumindest teilweise durch den Eckspalt fließt und entlang der Verbindungskante unterhalb des ersten Körpers fließt und sich ferner entlang der Verbindungskante oberhalb und unterhalb des ersten Körpers ansammelt sowie in und/oder entlang der Verbindungskante oberhalb und unterhalb des Körpers erstarrt.

Das System umfasst die Dichtsubstanz, die bspw. aus Wachs gebildet ist.

Das System umfasst weiterhin ein Trägerbauteil, das in einem Raum zwischen dem ersten und zweiten Bauteil in und/oder auf dem dreieckigen Verbindungsbereich anzuordnen ist.

Hierbei ist es möglich, dass das Fließelement als Teil des Trägerbauteils ausgebildet ist.

Weiterhin ist es möglich, dass das Fließelement als zusätzliches Bauteil auf dem Trägerbauteil anzuordnen ist. Dabei ist mindestens ein Halteabschnitt des Fließelements an und/oder auf dem Trägerbauteil anzuordnen, in der Regel zu befestigen. Dieses Trägerbauteil ist bspw. aus Kunststoff und/oder Schaumstoff gebildet und u. a. zur akustischen Isolation vorgesehen.

Weiterhin ist es möglich, dass mindestens eines der beiden Bauteile eine Öffnung als Komponente des Systems aufweist, die oberhalb der Verbindungskante und oberhalb des Fließelements angeordnet und/oder anzuordnen ist, wobei die Dichtsubstanz durch die Öffnung zu schütten ist. Von dort aus fließt sie indirekt bzw. über einen Abschnitt der Verbindungskante, die oberhalb des Fließelements angeordnet ist, und wird von dort indirekt auf das Fließelement geschüttet. Alternativ wird die flüssige Dichtsubstanz direkt durch die Öffnung auf das Fließelement geschüttet. Ausgehend von dem Fließelement fließt die Dichtsubstanz durch den Eckspalt entlang eines Abschnitts der Verbindungskante unterhalb des Fließelements.

Die Stelle an der Verbindungskante, an der das Fließelement angeordnet und/oder anzuordnen ist und die sich zwischen den beiden Bauteilen und dem in Ausgestaltung vorzusehenden Trägerbauteil befindet, wird auch als Wachsablaufecke bezeichnet. Durch Anwendung des Verfahrens mit dem System ist auf dem Körper bspw. Wachs als Dichtsubstanz zu sammeln und auszuhärten, wodurch die im dreieckigen Verbindungsbereich angeordnete Wachsablaufecke zu verschließen ist, wobei unter anderem eine akustische Abschottung zu erreichen ist.

Falls als Dichtsubstanz flüssiges Wachs verwendet wird, ist bspw. die als Radlaufkante ausgebildete Verbindungskante bei Durchführung des Verfahrens zu wachsen, wobei ein Abkühlverhalten des flüssigen sowie erwärmten Wachses zum Verschließen der Wachsecke verwendet wird.

Abgesehen von dem üblicherweise dreieckigen ersten Körper mit den beiden Außenkanten, der als Komponente des Fließelements ausgebildet ist, ist in Ausgestaltung vorgesehen, dass das Fließelement noch weitere Komponenten bzw. Körper umfasst.

Durch Anwendung des Verfahrens kann bspw. auf eine Schäumanlage zum nachträglichen Verschließen der Wachsecke verzichtet werden. Falls bereits eine Schäumanlage einer Fertigungsstätte des Kraftfahrzeugs vorhanden sein sollte, ist es nicht erforderlich, diese nach dem Wachsen im Rahmen des Verfahrens in einen Fertigungsprozess einzutakten. Der abzudichtende Verbindungsbereich ist üblicherweise hinter einer seitlichen Tür des Kraftfahrzeugs, durch die Personen in einen Innenraum des Kraftfahrzeugs gelangen, angeordnet. Das Verfahren ist bspw. beim Herstellen eines dreitürigen oder eines fünftürigen Kraftfahrzeugs einzusetzen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung einen Verbindungsbereich zwischen zwei Bauteilen eines Kraftfahrzeugs, in dem ein Fließelement anzuordnen ist.
Figur 2 zeigt in schematischer Darstellung den Verbindungsbereich aus Figur 1, in dem ein Beispiel eines Fließelements einer ersten Ausführungsform des erfindungsgemäßen Systems angeordnet ist.
Figur 3 zeigt in schematischer Darstellung den Verbindungsbereich aus Figur 1, in dem ein Beispiel eines Fließelements einer zweiten Ausführungsform des erfindungsgemäßen Systems angeordnet ist, aus einer ersten Perspektive.
Figur 4 zeigt in schematischer Darstellung den Verbindungsbereich aus Figur 1, in dem das Beispiel eines Fließelements der zweiten Ausführungsform des erfindungsgemäßen Systems angeordnet ist, aus einer zweiten Perspektive.
Figur 5 zeigt in schematischer Darstellung einen Rohbau einer Karosserie eines Kraftfahrzeugs, in dem ein Beispiel eines Fließelements einer dritten Ausführungsform des erfindungsgemäßen Systems angeordnet ist.

Die Figuren werden zusammenhängend und übergreifend beschrieben. Gleichen Komponenten sind dieselben Bezugsziffern zugeordnet.

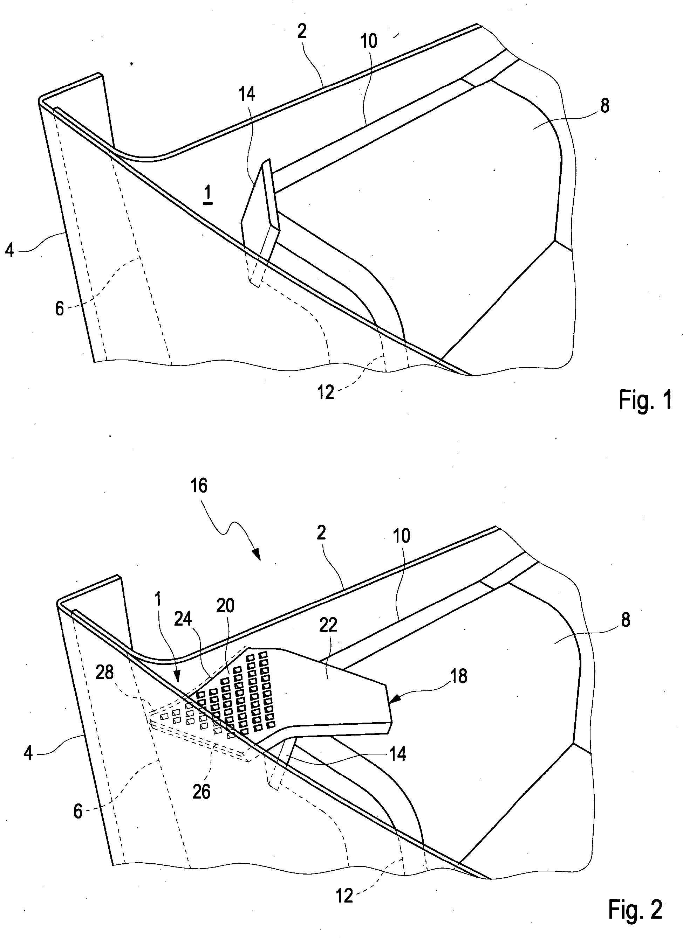

Eine in Figur 1 gezeigte Anordnung eines Rohbaus eines Kraftfahrzeugs umfasst hier ein erstes Bauteil 2, das hier als Radhaus des Kraftfahrzeugs ausgebildet ist, und ein zweites Bauteil 4, das hier als Seitenwand der Karosserie des Kraftfahrzeug ausgebildet ist. Dabei stoßen die beiden genannten Bauteile 2, 4 an einer Verbindungskante 6 aufeinander, wobei die beiden Bauteile 2, 4 entlang dieser Verbindungskante 6 miteinander verbunden sind. Figur 1 zeigt weiterhin ein Trägerbauteil 8, das hier aus Kunststoff gebildet und entlang eines ersten Verbindungsabschnitts 10 mit dem ersten Bauteil 2 sowie entlang eines zweiten Verbindungsabschnitts 12 mit dem zweiten Bauteil 4 verbunden ist. Dabei ist hier eine Ecke des Trägerbauteils 8 abgestumpft, wobei auf einem abgestumpften Bereich des Trägerbauteils 8 ein hier viereckiges Halteelement 14 angeordnet ist. Die beiden Bauteile 2, 4 sowie das Trägerbauteil 8 begrenzen hier den dreieckigen Verbindungsbereich 1, der auch als Wachsablaufecke ausgebildet und/oder zu bezeichnen ist.

Die erste Ausführungsform des erfindungsgemäßen Systems 16 ist in Figur 2 schematisch dargestellt. Dabei umfasst diese erste Ausführungsform des Systems 16 ein Beispiel eines Fließelements 18, das wiederum einen ersten Körper 20 sowie einen zweiten Körper 22 als Halteabschnitt aufweist. Der erste Körper 20 umfasst zwei Außenkanten 24, 26, wobei eine erste Außenkante 24 dem ersten Bauteil 2 und eine zweite Außenkante 26 dem zweiten Bauteil 4 zugewandt ist. Dieser erste Körper 20 ist in dem dreieckigen Verbindungsbereich 1 angeordnet. Zwischen den beiden Außenkanten 24, 26 des ersten Körpers 20 und den beiden Bauteilen 2, 4 ist hier ein Eckspalt 28 angeordnet.

Weiterhin weist der erste Körper 20 eine Vielzahl von Öffnungen auf, die den ersten Körper 20 hier als Sieb ausbilden. Der zweite Körper 22, der mit dem ersten Körper 20 verbunden ist, ist hier trapezförmig ausgebildet. Dabei ist das Fließelement 18 über den zweiten Körper 22 als Halteabschnitt an dem Halteelement 14 des Trägerbauteils 8 befestigt. In einer alternativen Ausgestaltung ist es möglich, dass das Fließelement 18, d. h. zumindest der erste Körper 20 als Teil des Trägerbauteils 8 ausgebildet ist. Zum Abdichten der Verbindungskante 6 wird hier erwärmtes, flüssiges Wachs als Dichtsubstanz in den Verbindungsbereich 1 und somit auch auf den ersten Körper 20 sowie auf den Eckspalt 28 geschüttet. Dabei wird über den ersten Körper 20 für das Wachs ein Strömungswiderstand bereitgestellt.

Ein erster Teil des Wachses sammelt sich auf dem ersten Körper 20 an und wird entlang eines ersten Abschnitts der Verbindungskante 6 oberhalb des ersten Körpers 20 des Fließelements 18 angesammelt. Weiterhin fließt Wachs durch den Eckspalt 28 und die Öffnungen des ersten Körpers 20 entlang der abzudichtenden Verbindungskante 6 nach unten und wird entlang eines zweiten Abschnitts der Verbindungskante 6 unterhalb des Körpers 20 angesammelt. Nachdem das Wachs entlang der beiden Abschnitte der Verbindungskante 6 erstarrt ist, dichtet es diese ab.

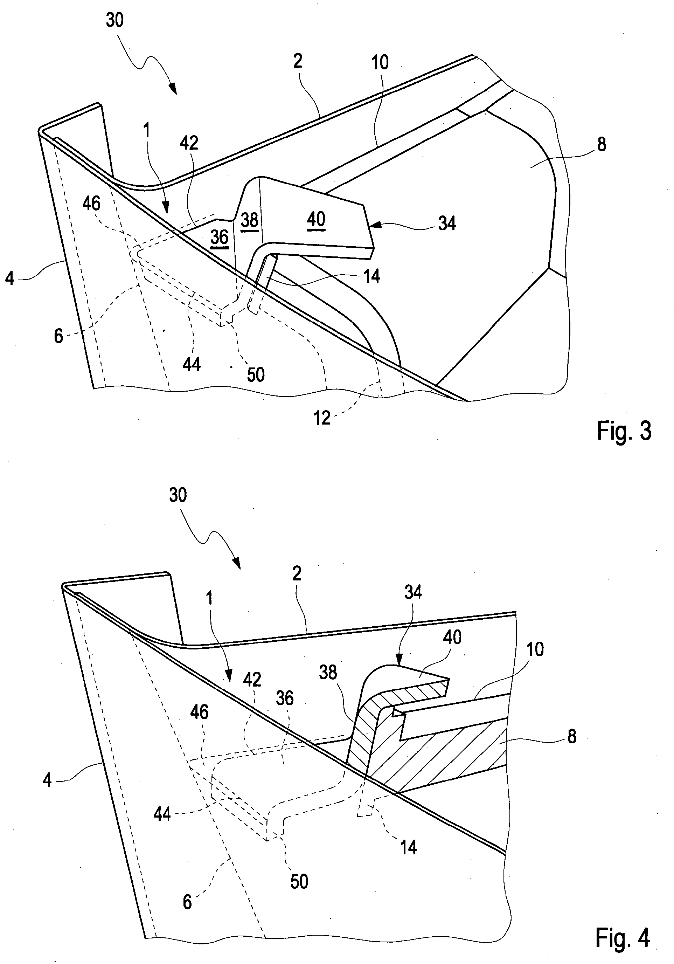

Die in den Figuren 3 und 4 schematisch dargestellte zweite Ausführungsform des erfindungsgemäßen Systems 30 umfasst ein weiteres Beispiel für ein Fließelement 34, das hier ebenfalls einen ersten Körper 36 aufweist, an den sich ein zweiter Körper 38 anschließt, an den sich wiederum ein dritter Körper 40 des Fließelements 34 anschließt. Hierbei ist zumindest der zweite und/oder dritte Körper 38, 40 als Halteabschnitt des Fließelements 34 ausgebildet. Hierbei ist eine erste Außenkante 42 des ersten Körpers 36 dem ersten Bauteil 2 zugewandt. Eine zweite Außenkante 44 ist in dem Verbindungsbereich 1 dem zweiten Bauteil 4 zugewandt. Auch hier befindet sich zwischen den beiden Außenkanten 42, 44 und den beiden Bauteilen 2, 4 ein Eckspalt 46. Das Fließelement 34 ist hier an dem Trägerbauteil 8 angeordnet. Alternativ hierzu ist es möglich, dass das Fließelement 34 als Teil des Trägerbauteils 8 ausgebildet ist.

Bei Durchführung des Verfahrens wird auch hier flüssiges Wachs als Dichtsubstanz in den Verbindungsbereich 1 sowie auf den ersten Körper 36 geschüttet. Dabei sammelt sich das Wachs zunächst auf dem ersten Körper 36 und fließt durch den Eckspalt 46 entlang der abzudichtenden Verbindungskante 6.

Weiterhin trifft ein Strom aus flüssigem Wachs auf eine Fläche des ersten Körpers 36, wird umgelenkt und läuft zwischen dem hier kellenförmigen ersten Körper 36, d. h. durch den Eckspalt 46 zwischen den Außenkanten 42, 44 des ersten Körpers 36 und den beiden Bauteilen 2, 4 durch den Eckspalt 46 nach unten zu der Verbindungskante 6, wobei die Verbindungskante 6 unterhalb des Körpers 36 von dem Wachs abzudichten ist. Dabei ist über eine Länge eines Flansches 50 eine Strömungsgeschwindigkeit des Wachses einzustellen. Je länger der Flansch 50 ist, desto mehr Wachs wird daran gehindert abzufließen, wobei sich Wachs auf dem ersten Körper 36 sowie auch entlang der Verbindungskante 6 oberhalb des ersten Körpers 36 ansammelt. Nachdem das Wachs abgekühlt ist, erstarrt es entlang der Verbindungskante 6 oberhalb und unterhalb des Körpers 36 und dichtet die Verbindungskante 6 ab.

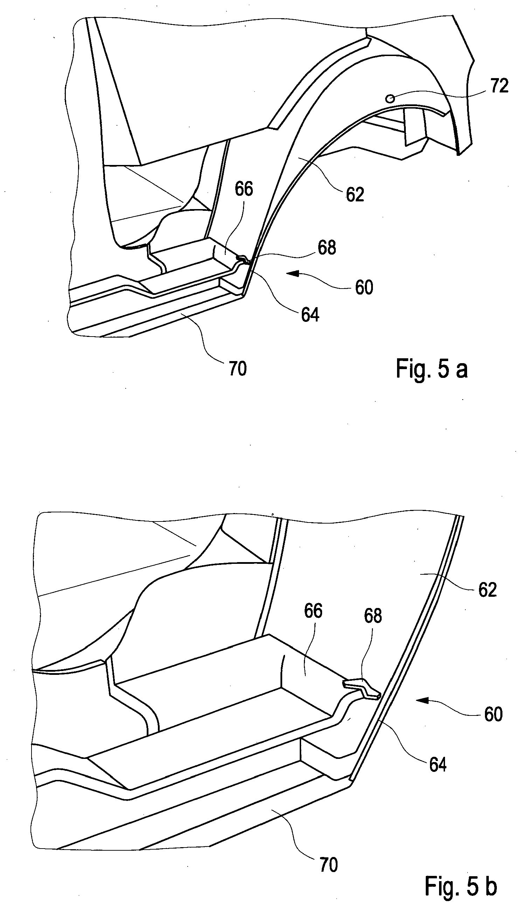

Die dritte Ausführungsform des erfindungsgemäßen Systems 60 ist in den Figuren 5a und 5b schematisch dargestellt. Dabei zeigt Figur 5b ein vergrößertes Detail aus Figur 5a. Dabei zeigt Figur 5a ein erstes Bauteil 62, das hier als Radhaus ausgebildet ist. In den Figuren 5a und 5b ist auch eine Verbindungskante 64 gezeigt, entlang der das erste Bauteil 62 mit einem hier nicht weiter dargestellten zweiten Bauteil verbunden ist, wobei die beiden Bauteile 62 entlang der Verbindungskante 64 aufeinander stoßen. Außerdem ist zwischen den beiden Bauteilen ein Trägerbauteil 66 angeordnet, das sowohl das erste Bauteil 62 sowie das weitere hier nicht gezeigte zweite Bauteil entlang eines jeweiligen Verbindungsabschnitts berührt. Unterhalb des Trägerbauteils 66 ist hier ein Schweller 70 angeordnet. In einem hier dreieckigen Verbindungsbereich zwischen den beiden Bauteilen 62 und dem Trägerbauteil 66 ist hier ein Fließelement 68 angeordnet, das entweder als Komponente des Trägerbauteils 66 oder als zusätzliches Bauteil ausgebildet ist.

Weiterhin zeigt Figur 5a eine Öffnung 72 des ersten Bauteils 62, die entlang der Verbindungskante 64 oberhalb des Fließelements 68 angeordnet ist. Wie bei den beiden voranstehend beschriebenen Ausführungsformen des Systems 16, 30 ist auch bei der dritten Ausführungsform des Systems 60 vorgesehen, dass eine erste Außenkante des Fließelements 68 in dem dreieckigen Verbindungsbereich dem ersten Bauteil 62 und eine zweite Außenkante des Fließelements 68 einem zweiten Bauteil zugeordnet ist, wobei zwischen den beiden Außenkanten des Fließelements 68 und dem ersten Bauteil 62 sowie dem zweiten Bauteil ebenfalls ein Eckspalt gebildet wird.

Bei Durchführung einer Ausführungsform des Verfahrens wird durch die Öffnung 72 bzw. ein entsprechendes Loch des ersten Bauteils 62 erwärmtes flüssiges Wachs als Verbindungssubstanz geschüttet, die entlang der Verbindungskante 64 nach unten fließt. Sobald das Wachs auf das Fließelement 68 trifft und somit auf dieses geschüttet wird, wird dessen Fließgeschwindigkeit reduziert. Dabei ergibt sich, dass ein Teil des Wachses oberhalb des Fließelements 68 entlang der Verbindungskante 64 angesammelt wird. Ein weiterer Teil des Wachses fließt durch den Eckspalt entlang der Verbindungskante 64 weiter nach unten. Sobald das warme flüssige Wachs erstarrt bzw. ausgehärtet ist, wird die Verbindungskante 64 durch das Wachs abgedichtet. Weiterhin ist es möglich, dass sich das flüssige Wachs auch unterhalb der Verbindungskante 64 entlang des Schwellers 70 ansammelt und dort aushärtet bzw. erstarrt.

## Patentansprüche

1. Verfahren zum Abdichten einer Verbindungskante (6, 64), an der zwei Bauteile (2, 4, 62) eines Kraftfahrzeugs aneinandergrenzen, wobei sich die Verbindungskante (6, 64) zwischen den beiden Bauteilen (2, 4, 62) befindet, wobei in einem dreieckigen Verbindungsbereich (1) zwischen den beiden Bauteilen (2, 4, 62) ein Fließelement (18, 34, 68) angeordnet wird, das einen ersten Körper (20, 36) mit zwei Außenkanten (24, 26, 42, 44) aufweist, die an einer Ecke des ersten Körpers (20, 36) aufeinanderstoßen, wobei jeweils eine Außenkante (24, 26, 42, 44) des ersten Körpers (20, 36) einem der beiden Bauteile (2, 4, 62) und die Ecke der Verbindungskante (6, 64) zugewandt wird, wobei entlang eines Abschnitts jeweils einer Außenkante (24, 26, 42, 44) und jeweils eines Bauteils (2, 4, 62) sowie zwischen der Ecke und der Verbindungskante (6, 64) ein Eckspalt (28, 46) bereitgestellt wird, wobei auf den ersten Körper (20, 36) eine flüssige Dichtsubstanz geschüttet wird, die sich zumindest teilweise auf dem ersten Körper (20, 36) ansammelt.

2. Verfahren nach Anspruch 1, bei dem die Dichtsubstanz zumindest teilweise durch den Eckspalt (28, 46) fließt, entlang der Verbindungskante (6, 64) unterhalb des ersten Körpers (20, 36) fließt, sich entlang der Verbindungskante (6, 64) oberhalb und unterhalb des ersten Körpers (20, 36) ansammelt sowie entlang der Verbindungskante (6, 64) erstarrt.

3. Verfahren nach Anspruch 1 oder 2, bei dem vorgesehen ist, dass der erste Körper (20, 36) des Fließelements (18, 34, 68) eine Vielzahl von Löchern aufweist, die ein Raster bilden, wobei eine Fließgeschwindigkeit der Dichtsubstanz durch die Löcher reduziert wird.

4. Verfahren nach einem der voranstehenden Ansprüche, bei dem vorgesehen ist, dass an den Außenkanten (24, 26, 42, 44) des ersten Körpers (20, 36) ein Flansch (50) angeordnet ist, wobei jeweils ein Abschnitt des Flansches (50) den ersten Körper (20, 36) fortsetzt und zu einer Außenseite des ersten Körpers (20, 36) einen Winkel aufweist, wobei bei Durchführung des Verfahrens zumindest ein Teil der flüssigen Dichtsubstanz über den Flansch (50) zu der Verbindungskante (6, 64) fließt.

5. Verfahren nach einem der voranstehenden Ansprüche, bei dem vorgesehen ist, dass die Dichtsubstanz ursprünglich fest ist und erhitzt wird, wobei die Dichtsubstanz verflüssigt und auf den ersten Körper (20, 36) geschüttet wird, wobei die Dichtsubstanz entlang der Verbindungskante (6, 64) abgekühlt wird und dadurch sowohl oberhalb als auch unterhalb des ersten Körpers (20, 36) erstarrt.

6. Verfahren nach einem der voranstehenden Ansprüche, mit dem eine Verbindungskante (6, 64) zwischen einem Radhaus als erstem Bauteil (2, 62) und einer Seitenwand als zweitem Bauteil (4) abgedichtet wird.

7. Verfahren nach einem der voranstehenden Ansprüche, bei dem die Dichtsubstanz zunächst auf eine Stelle der Verbindungskante (6, 64) geschüttet wird, die oberhalb des Fließelements (18, 34, 68) angeordnet ist, wobei vorgesehen ist, dass die Dichtsubstanz ausgehend von dieser Stelle zu dem Fließelement (18, 34, 68) fließt.

8. Verfahren nach einem der voranstehenden Ansprüche, bei dem die Dichtsubstanz entlang der Verbindungskante (6, 64) angesammelt wird.

9. System zum Abdichten einer Verbindungskante (6, 64), aufweisend zwei Bauteile (2, 4, 62) eines Kraftfahrzeugs und die Verbindungskante (6, 64), an welcher die zwei Bauteile (2, 4, 62) aneinandergrenzen, wobei sich die Verbindungskante (6, 64) zwischen den beiden Bauteilen (2, 4, 62) befindet, **dadurch gekennzeichnet, dass** das System (16, 30, 60) ein Fließelement (18, 34, 68) aufweist, wobei das Fließelement (18, 34, 68) einen ersten Körper (20, 36) mit zwei Außenkanten (24, 26, 42, 44) aufweist, die an einer Ecke aufeinanderstoßen, wobei das Fließelement (18, 34, 68) in einem dreieckigen Verbindungsbereich (1) zwischen den beiden Bauteilen (2, 4, 62) anzuordnen ist, wobei jeweils eine Außenkante (24, 26, 42, 44) des ersten Körpers (20, 36) einem der beiden Bauteile (2, 4, 62) und die Ecke der Verbindungskante (6, 64) zuzuwenden ist, wobei entlang eines Abschnitts jeweils einer Außenkante (24, 26, 42, 44) und jeweils eines Bauteils (2, 4, 62) sowie zwischen der Ecke und der Verbindungskante (6, 64) ein Eckspalt (28, 46) bereitzustellen ist, wobei auf den ersten Körper (20, 36) eine flüssige Dichtsubstanz zu schütten ist, die sich zumindest teilweise auf dem ersten Körper (20, 36) ansammelt.

10. System nach Anspruch 9, bei dem die Dichtsubstanz aus Wachs gebildet ist.

11. System nach Anspruch 9 oder 10, das ein Trägerbauteil (8, 66) umfasst, das in einem Raum zwischen dem ersten und zweiten Bauteil (2, 4, 62) in dem dreieckigen Verbindungsbereich (1) anzuordnen ist.

12. System nach Anspruch 11, bei dem das Fließelement (18, 34, 68) als Teil des Trägerbauteils (8, 66) ausgebildet ist.

13. System nach Anspruch 11, bei dem das Fließelement (18, 34, 68) auf dem Trägerbauteil (8, 66) angeordnet ist.

14. System nach einem der Ansprüche 9 bis 13, bei dem das Trägerbauteil (8, 66) aus Kunststoff gebildet und zur akustischen Isolation vorgesehen ist.

15. System nach einem der Ansprüche 9 bis 14, bei dem mindestens eines der beiden Bauteile (2, 4, 62) eine Öffnung (72) aufweist, die oberhalb der Verbindungskante (6, 64) und oberhalb des Fließelements (18, 34, 68) angeordnet ist, wobei die Dichtsubstanz durch die Öffnung (72) zu schütten ist.

## Claims

1. Method for sealing a joining edge (6, 64), at which two components (2, 4, 62) of a motor vehicle abut onto each other, wherein the joining edge (6, 64) is located between the two components (2, 4, 62), wherein a flow element (18, 34, 68) is arranged between the two components (2, 4, 62) in a triangular joining region (1), said flow element having a first body (20, 36) with two outer edges (24, 26, 42, 44) which strike each other at a corner of the first body (20, 36), wherein an outer edge (24, 26, 42, 44) of the first body (20, 36) is facing towards one of the two components (2, 4, 62) and the corner of the joining edge (6, 64) respectively, wherein a corner gap (28, 46) is provided along a section of an outer edge (24, 26, 42, 44) respectively and a component (2, 4, 62) respectively as well as between the corner and the joining edge (6, 64), wherein a liquid sealing substance is poured onto the first body (20, 36) which accumulates at least partially on the first body (20, 36).

2. Method according to claim 1, in which the sealing substance flows at least partially through the corner gap (28, 46), flows along the joining edge (6, 64) below the first body (20, 36), accumulates along the joining edge (6, 64) above and below the first body (20, 36) and solidifies along the joining edge (6, 64).

3. Method according to claim 1 or 2, in which it is provided that the first body (20, 36) of the flow element (18, 34, 68) has a plurality of holes which form a grid, wherein a flow speed of the sealing substance is reduced by the holes.

4. Method according to any one of the preceding claims, in which it is provided that a flange (50) is arranged on the outer edges (24, 26, 42, 44) of the first body (20, 36), wherein a section of the flange (50) continues the first body (20, 36) respectively and has an angle to an outer side of the first body (20, 36), wherein at least one part of the liquid sealing substance flows over the flange (50) to the joining edge (6, 64) during implementation of the method.

5. Method according to any one of the preceding claims, in which it is provided that the sealing substance is initially solid and is heated, wherein the sealing substance liquifies and is poured onto the first body (20, 36), wherein the sealing substance is cooled along the joining edge (6, 64) and thereby solidifies both above and below the first body (20, 36).

6. Method according to any one of the preceding claims, with which a joining edge (6, 64) between a wheelhouse as a first component (2, 62) and a side wall as a second component (4) is sealed.

7. Method according to any one of the preceding claims, in which the sealing substance is poured firstly on a point of the joining edge (6, 64) which is arranged above the flow element (18, 34, 68), wherein it is provided that the sealing substance flows to the flow element (18, 34, 68) originating from this point.

8. Method according to any one of the preceding claims, in which the sealing substance is accumulated along the joining edge (6, 64).

9. System for sealing a joining edge (6, 64), having two components (2, 4, 62) of a motor vehicle and the joining edge (6, 64) at which the two components (2, 4, 62) abut onto each other, wherein the joining edge (6, 64) is located between the two components (2, 4, 62), **characterised in that** the system (16, 30, 60) has a flow element (18, 34, 68), wherein the flow element (18, 34, 68) has a first body (20, 36) with two outer edges (24, 26, 42, 44), which strike each other at a corner, wherein the flow element (18, 34, 68) is arranged between the two components (2, 4, 62) in a triangular joining region (1), wherein an outer edge (24, 26, 42, 44) of the first body (20, 36) is to be turned towards one of the two components (2, 4, 62) and the corner of the joining edge (6, 64) respectively, wherein a corner gap (28, 46) is to be provided along a section of an outer edge (24, 26, 42, 44) respectively and a component (2, 4, 62) respectively as well as between the corner and the joining edge (6, 64), wherein a liquid sealing substance is to be poured onto the first body (20, 36), said sealing substance accumulating at least partially on the first body (20, 36).

10. System according to claim 9, in which the sealing substance is formed from wax.

11. System according to claim 9 or 10, which comprises a support component (8, 66) which is to be arranged in a chamber between the first and second component (2, 4, 62) in the triangular joining region (1).

12. System according to claim 11, in which the flow element (18, 34, 68) is formed as a part of the support component (8, 66).

13. System according to claim 11, in which the flow element (18, 34, 68) is arranged on the support component (8, 66).

14. System according to any one of claims 9 to 13, in which the support component (8, 66) is formed from plastic and is provided for acoustic insulation.

15. System according to any one of claims 9 to 14, in which at least one of the two components (2, 4, 62) has an opening (72), which is arranged above the joining edge (6, 64) and above the flow element (18, 34, 68), wherein the sealing substance is to be poured through the opening (72).

## Revendications

1. Procédé servant à étanchéifier un bord de liaison (6, 64), au niveau duquel deux composants (2, 4, 62) d'un véhicule automobile se jouxtent, dans lequel le bord de liaison (6, 64) se trouve entre les deux composants (2, 4, 62), dans lequel est disposé dans une zone de liaison (1) triangulaire entre les deux composants (2, 4, 62) un élément d'écoulement (18, 34, 68), qui présente un premier corps (20, 36) avec deux bords extérieurs (24, 26, 42, 44), qui viennent s'entrechoquer au niveau d'un angle du premier corps (20, 36), dans lequel respectivement un bord extérieur (24, 26, 42, 44) du premier corps (20, 36) est tourné vers un des deux composants (2, 4, 62) et l'angle est tourné vers le bord de liaison (6, 64), dans lequel une fente d'angle (28, 46) est fournie le long d'un segment respectivement d'un bord extérieur (24, 26, 42, 44) et respectivement d'un composant (2, 4, 62) ainsi qu'entre l'angle et le bord de liaison (6, 64), dans lequel est déversée sur le premier corps (20, 36) une substance d'étanchéité liquide, qui s'accumule au moins en partie sur le premier corps (20, 36).

2. Procédé selon la revendication 1, dans lequel la substance d'étanchéité s'écoule au moins en partie à travers la fente d'angle (28, 46), s'écoule le long du bord de liaison (6, 64) sous le premier corps (20, 36), s'accumule le long du bord de liaison (6, 64) au-dessus et en dessous du premier corps (20, 36) et se solidifie le long du bord de liaison (6, 64).

3. Procédé selon la revendication 1 ou 2, où il est prévu que le premier corps (20, 36) de l'élément d'écoulement (18, 34, 68) présente une pluralité de trous, qui forment une grille, dans lequel une vitesse d'écoulement de la substance d'étanchéité est réduite par les trous.

4. Procédé selon l'une quelconque des revendications précédentes, où il est prévu qu'une bride (50) est disposée au niveau des bords extérieurs (24, 26, 42, 44) du premier corps (20, 36), dans lequel respectivement un segment de la bride (50) prolonge le premier corps (20, 36) et présente par rapport à un côté extérieur du premier corps (20, 36) un angle, dans lequel au moins une partie de la substance d'étanchéité liquide s'écoule en passant par la bride (50) en direction du bord de liaison (6, 64) lors de la mise en oeuvre du procédé.

5. Procédé selon l'une quelconque des revendications précédentes, où il est prévu que la substance d'étanchéité est solide initialement et est chauffée, dans lequel la substance d'étanchéité est liquéfiée et déversée sur le premier corps (20, 36), dans lequel la substance d'étanchéité est refroidie le long du bord de liaison (6, 64) et se solidifie ainsi à la fois au-dessus et en dessous du premier corps (20, 36).

6. Procédé selon l'une quelconque des revendications précédentes, avec lequel un bord de liaison (6, 64) est étanchéifié entre un logement de roue en tant que premier composant (2, 62) et une paroi latérale en tant que second composant (4).

7. Procédé selon l'une quelconque des revendications précédentes, où la substance d'étanchéité est déversée en premier lieu sur un endroit du bord de liaison (6, 64), qui est disposé au-dessus de l'élément d'écoulement (18, 34, 68), dans lequel il est prévu que la substance d'étanchéité s'écoule en partant dudit endroit vers l'élément d'écoulement (18, 34, 68).

8. Procédé selon l'une quelconque des revendications précédentes, où la substance d'étanchéité s'accumule le long du bord de liaison (6, 64).

9. Système servant à étanchéifier un bord de liaison (6, 64) présentant deux composants (2, 4, 62) d'un véhicule automobile et le bord de liaison (6, 64), au niveau duquel les deux composants (2, 4, 62) se jouxtent, dans lequel le bord de liaison (6, 64) se trouve entre les deux composants (2, 4, 62), **caractérisé en ce que**
le système (16, 30, 60) présente un élément d'écoulement (18, 34, 68), dans lequel l'élément d'écoulement (18, 34, 68) présente un premier corps (20, 36) avec deux bords extérieurs (24, 26, 42, 44), qui viennent s'entrechoquer au niveau d'un angle, dans lequel l'élément d'écoulement (18, 34, 68) est à disposer dans une zone de liaison (1) triangulaire entre les deux composants (2, 4, 62), dans lequel respectivement un bord extérieur (24, 26, 42, 44) du premier corps (20, 36) est à tourner vers un des deux composants (2, 4, 62) et l'angle est à tourner vers le bord de liaison (6, 64), dans lequel une fente d'angle (28, 46) est à fournir le long d'une portion de respectivement un bord extérieur (24, 26, 42, 44) et respectivement d'un composant (2, 4, 62) ainsi qu'entre l'angle et le bord de liaison (6, 64), dans lequel une substance d'étanchéité liquide, qui s'accumule au moins en partie sur le premier corps (20, 36), est à déverser sur le premier corps (20, 36).

10. Système selon la revendication 9, où la substance d'étanchéité est formée à partir de cire.

11. Système selon la revendication 9 ou 10, qui comprend un composant de support (8, 66), qui est à disposer dans un espace entre le premier et le second composant (2, 4, 62) dans la zone de liaison (1) triangulaire.

12. Système selon la revendication 11, où l'élément d'écoulement (18, 34, 68) est réalisé sous la forme d'une partie du composant de support (8, 66).

13. Système selon la revendication 11, où l'élément d'écoulement (18, 34, 68) est disposé sur le composant de support (8, 66).

14. Système selon l'une quelconque des revendications 9 à 13, où le composant de support (8, 66) est formé à partir de matière plastique et est prévu aux fins de l'isolation acoustique.

15. Système selon l'une quelconque des revendications 9 à 14, où au moins un des deux composants (2, 4, 62) présente une ouverture (72), qui est disposée au-dessus du bord de liaison (6, 64) et au-dessus de l'élément d'écoulement (18, 34, 68), dans lequel la substance d'étanchéité est à déverser à travers l'ouverture (72).
